(19) Europäisches Patentamt
European Patent Office
Office européen des brevets

(11) **EP 4 130 344 A1**

(12) **EUROPEAN PATENT APPLICATION**

(43) Date of publication:
**08.02.2023 Bulletin 2023/06**

(21) Application number: **21190119.4**

(22) Date of filing: **06.08.2021**

(51) International Patent Classification (IPC):
**C25B 15/025** *(2021.01)* **C25B 15/027** *(2021.01)*
**C25B 1/04** *(1974.07)*

(52) Cooperative Patent Classification (CPC):
**C25B 15/025; C25B 1/04; C25B 15/027**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **L'Air Liquide - Société Anonyme pour l'Etude et
l'Exploitation des Procédés Georges Claude
75321 Paris Cedex 07 (FR)**

(72) Inventors:
• **Do, Nga Thi Quynh**
**60388 Frankfurt a. M. (DE)**
• **Mighani, Moein**
**60388 Frankfurt a. M. (DE)**
• **Choudar, Yann**
**60388 Frankfurt a. M. (DE)**

(74) Representative: **Schwenderling, Jens
KEENWAY Patentanwälte Neumann Heine Taruttis
PartG mbB
Postfach 103363
40024 Düsseldorf (DE)**

(54) **OBTAINING A PRODUCT BY ELECTROLYSIS**

(57)      Method for obtaining a product by electrolysis, comprising:
a) determining a set point for a production output by minimizing a first mathematical function, which depends on the production output and on a predicted product demand,
b) determining respective set points for multiple process parameters by minimizing a second mathematical function, which depends on the set point for the production output determined in a), on the process parameters and on predicted degradation effects,
c) determining respective set points for changes of multiple control parameters by minimizing a third mathematical function, which depends on the set points for the process parameters determined in b) and on the changes of the control parameters,
d) obtaining the product by performing the electrolysis using the set points for the changes of the control parameters determined in c).

Fig. 1

EP 4 130 344 A1

**Description**

The invention is directed to obtaining one or more products by electrolysis. In particular, the invention is directed to a respective method and to a respective electrolysis arrangement. For example, the invention can be applied to the electrolysis of water in order to obtain hydrogen and oxygen as products.

It is known to obtain products such as hydrogen and oxygen from the electrolysis of water. In controlling the electrolysis process, various challenges have to be faced. These are similar for water electrolysis and various other types of electrolysis. For example, energy supply from renewable energy sources fluctuates. Also, wear of the involved devices, safety issues and ecological issues such as $CO_2$ emissions have to be taken into account. Known control methods are rather simple and have only limited capabilities. In particular in case of fluctuating conditions the known control methods are insufficient. This is particularly disadvantageous in large-scale industrial electrolysis applications.

The object of the invention is to improve the availability and efficiency of an electrolysis process in particular in case of fluctuating conditions.

The object is solved with the method and the electrolysis arrangement according to the independent claims. Advantageous refinements are presented in the dependent claims. The features described in the claims and in the description can be combined with each other in any technologically reasonable manner.

According to the invention a method is provided for obtaining a product by electrolysis. The method comprises:

a) determining a set point for a production output by minimizing a first mathematical function, which depends on the production output and on a predicted product demand,
b) determining respective set points for multiple process parameters by minimizing a second mathematical function, which depends on the set point for the production output determined in a), on the process parameters and on predicted degradation effects,
c) determining respective set points for changes of multiple control parameters by minimizing a third mathematical function, which depends on the set points for the process parameters determined in b) and on the changes of the control parameters,
d) obtaining the product by performing the electrolysis using the set points for the changes of the control parameters determined in c).

With the described method one or more products can be obtained by electrolysis. Preferably, the method is applied to the electrolysis of water. In that case hydrogen and oxygen can be obtained as the products. However, the method is likewise applicable to other kinds of electrolysis. This is due to the fact that the issues addressed by the method are not unique to the electrolysis of water.

The method comprises the control of the electrolysis process. However, the method also includes the actual performing of the electrolysis in d). To this end the method is an actual production method that results in an actual product(s) being obtained.

In d) the electrolysis is performed based on the results of a) to c). Therein, a) to c) constitute a three-level control process. With this control process, boundary conditions can be taken into account properly. Owing to the structure of the control process, the electrolysis can be performed in a reliable manner, in particular in case of fluctuating conditions.

In a) a set point for a production output is determined by minimizing a first mathematical function, which depends on the production output and on a predicted product demand. This is a first level of the control process.

The production output is a measure for how much of the product or products is obtained by electrolysis. The production output may be provided as a volume or mass of the product(s) obtained. This can be given in terms of a production rate. The set point for the production output quantifies how much of the product(s) is supposed to be provided per time. The electrolysis process is controlled such that the actual output is as close as possible to the set point for the production output. The set point can be provided as a fixed value or as a function of a time parameter. In the latter case respective values for the set point can be provided for several points of time. This preferably refers to a period of time beginning at the present.

The set point for the production output is determined by minimizing the first mathematical function, which depends on the production output and on a predicted product demand. The production output is the actual output of the electrolysis and can be determined, for example, by measurement. The production output on which the first mathematical function depends is the same quantity for which the set point is supposed to be determined according to a). That is, the actual production output from a period of time in the past is taken into account in order to obtain the set point for the future.

Further, a predicted product demand is taken into account. This is a measure of how much of the product is required. It would be inefficient to provide more of the product than the customers actually need. However, it still has to be ensured that the demand of all customers is satisfied. Hence, the product demand is taken into account in the process control according to a). The product demand can be predicted using parameters such as a targeted customer production, CO2 tax, storage capacities and/or availability of production units on a supply network.

Presented in a simplified manner, the first mathematical function $f_1$ may have the following structure:

$$f_1 = \text{Min } \Sigma \text{ (set point for the production output + production storage – production product demand)} + \Sigma \text{ cost of production (based on electricity price and } CO_2 \text{ tax)}$$

The first mathematical function can be minimized by satisfying constraints. This yields the set point for the production output. Therein, prediction models of the form

$$y_i = f(y_{i-1}, \dots, y_{i-n}) + g(\varepsilon_{i-1}, \dots, \varepsilon_{i-m}) + h(x_{i-1}, \dots, x_{i-b}),$$

can be used, wherein $f(y_{i-1}, \dots, y_{i-n})$ determines the relationship between an output and its past values, $g(\varepsilon_{i-1}, \dots, \varepsilon_{i-m})$ captures the effects of noise in the data and

$h(x_{i-1}, \dots, x_{i-b})$ determines the relationship between the output and external exciting variables.

The first mathematical function $f_1$ can be, for example:

$$f_1 = P_{out} + P_S - P_D + C$$

Therein, $P_{out}$ is a parametric mathematical model representing the production output, for which a set point is supposed to be determined according to a). $P_S$ is a parameter representing a stored amount of the product and $P_D$ is the predicted product demand. C represents the cost of production. In order to be able to treat all these parameters as a sum, preferably $P_{out}$, $P_S$, $P_D$ and C are parameters without any unit.

It is not necessary that the first mathematical function has the structure of the given example. In particular, the first mathematical function does not have to be a sum of parameters having the power 1 or an equal weighing factor for each term. Depending on how the production output and the predicted product demand are expressed mathematically, the first mathematical function can have various structures. Also, the first mathematical function can depend on various further parameters. For the main concept of the described method the structure of the first mathematical function is not essential. Any mathematical function can be used as the first mathematical function as long as this function depends on the production output and on a predicted product demand and as long as a set point for the production output can be obtained from minimizing this function.

On the first level market trends and behavior predictive models can be used to predict fluctuations in the customers' demand and to optimize the supply chains and scheduling of the production. Inputs to this level may include information coming from the market and customers like $CO_2$ tax, electricity price, customer targeted production, storage, availability of production units on a supply network.

In b) respective set points for multiple process parameters are determined by minimizing a second mathematical function, which depends on the set point for the production output determined in a), on the process parameters and on predicted degradation effects. Preferably, the second mathematical function further depends on at least one parameter indicative of a safety and/or maintenance aspect.

This is a second level of the control process. The result of the first level, that is the set point for the production output determined in a), is used as an input at the second level. The result of b) is respective set points for multiple process parameters. The set points are chosen such that the production output is adjusted to the corresponding set point obtained in a). To this end, the second level of the control process is directed to the question of how the desired production output determined on the first level can be realized.

Process parameters can be adjusted directly or indirectly. For example, an electrical current flowing between an anode and cathode of an electrolysis stack can be adjusted directly by adjusting a setting of a current source. Other process parameters can only be adjusted indirectly. For example, temperatures may increase as a consequence of increasing the electrical current flowing between the anode and cathode.

Process parameters can be any parameters that can be used to characterize and/or manipulate the process of the electrolysis. For example, the process parameters can be some or all of the following:

- an anode cooling flow (for example provided in l/h),
- a cathode cooling flow (for example provided in l/h),
- an anode pump speed (for example provided in rpm),
- a cathode pump speed (for example provided in rpm),
- an anode product flow (for example provided in kg/h),

- a cathode product flow (for example provided in kg/h),
- an electrical current (for example provided in A),
- an electrical voltage (for example provided in V),
- an electrolysis medium flow (for example provided in l/h),
- a temperature of an anode (for example provided in K),
- a temperature of a cathode (for example provided in K),
- a temperature of the electrolysis medium (for example provided in K),
- a temperature of an anode product (for example provided in K),
- a temperature of a cathode product (for example provided in K),
- a filling level of an anode separator (for example provided in %),
- a filling level of a cathode separator (for example provided in %),
- an anode pressure (for example provided in bar),
- a cathode pressure (for example provided in bar).

This list of process parameters is exemplarily and not comprehensive.

The set points for the process parameters are determined by minimizing a second mathematical function, which depends on the set point for the production output determined in a), on the process parameters and on predicted degradation effects. The process parameters are the actual values of the respective quantity and can be determined, for example, by measurement. The process parameters on which the second mathematical function depend are the same quantities for which the set points are supposed to be determined according to b). That is, the actual process parameters from a period of time in the past are taken into account in order to obtain the set points for the future.

Further, predicted degradation effects are taken into account. These can be obtained using mathematical models that have measurement values as inputs. These mathematical models can be obtained from experience, from physical based approaches, by empirical or historical data, by trial and error or by machine learning.

Presented in a simplified manner, the second mathematical function $f_2$ may have the following structure:

$$f_2 = \text{Min } \Sigma \text{ (calculated target production – set point for the production output +}$$
$$\Sigma \text{ degradation effects)}$$

$$= \text{Min } \Sigma \text{ (function (set points for the process parameters) – set point for the production output + } \Sigma \text{ degradation effects)}$$

Therein, the function (set points for the process parameters) describes physical effects of the electrolysis. The second mathematical function can be minimized by satisfying constraints. This yields the set points for process parameters. The calculated target production can be expressed as a function of the set points for the process parameters. Degradation models of the form

$$y_i = f(y_{i-1}, \dots, y_{i-n}) + g(\varepsilon_{i-1}, \dots, \varepsilon_{i-m}) + h(x_{i-1}, \dots, x_{i-b}),$$

can be used, wherein $f(y_{i-1}, \dots, y_{i-n})$ determines the relationship between an output and its past values, $g(\varepsilon_{i-1}, \dots, \varepsilon_{i-m})$ captures the effects of noise in the data and $h(x_{i-1}, \dots, x_{i-b})$ determines the relationship between the output and external exciting variables.

The second mathematical function $f_2$ can be, for example:

$$f_2 = P_{out}(p_i) - P_{out}^S + D$$

Therein, $P_{out}(p_i)$ is the production output calculated in terms of the process parameters $p_i$. $P_{out}^S$ is the set point for the production output determined in a). $D$ is a measure for the predicted degradation effects. In order to be able to treat all these parameters as a sum, preferably $P_{out}(p_i)$, $P_{out}^S$ and $D$ are parameters without any unit.

It is not necessary that the second mathematical function has the structure of the given example. In particular, the second mathematical function does not have to be a sum of parameters having the power 1 or the equal weighting factor for each term. Depending on how the set point for the production output, the process parameters and the predicted degradation effects are expressed mathematically, the second mathematical function can have various structures. Also, the second mathematical function can depend on various further parameters. For the main concept of the described method the structure of the second mathematical function is not essential. Any mathematical function can be used as the second mathematical function as long as this function depends on the set point for the production output determined in a), on the process parameters and on predicted degradation effects and as long as a set points for the process parameters can be obtained from minimizing this function.

The second mathematical function is preferably a physical based model, which virtually reflects the real operation asset. Also, the degradation model can be physical based on M L.

In b) a mixed-integer non-linear programming (MINLP) optimization engine can be used to receive predictions and information provided from models operating on the first or second levels and to calculate the set points for the process parameters in real time considering several aspects including market and demand fluctuations, process performance, process economics, asset lifetime, reliability and safety.

In c) respective set points for changes of multiple control parameters are determined by minimizing a third mathematical function, which depends on the set points for the process parameters determined in b) and on the changes of the control parameters.

This is a third level of the control process. The result of the second level, that is the set points for the multiple process parameters determined in b), is used as an input at the third level. The result of c) is respective set points for changes of multiple control parameters. The set points for the changes are chosen such that the process parameters are adjusted to the corresponding set points obtained in b). To this end, the third level of the control process is directed to the question of how the desired process parameters determined on the second level can be brought to the respective set points.

Control parameters are the parameters that can be used to manipulate the process of the electrolysis. For example, the control parameters can be some or all of the following:

- an anode cooling flow (for example provided in l/h),
- a cathode cooling flow (for example provided in l/h),
- an anode pump speed (for example provided in rpm),
- a cathode pump speed (for example provided in rpm),
- an anode product flow (for example provided in kg/h),
- a cathode product flow (for example provided in kg/h),
- an electrical current (for example provided in A),
- an electrolysis medium flow (for example provided in l/h).

This list of control parameters is exemplarily and not comprehensive. A parameter can be a process parameter as well as a control parameter.

The set points for the changes of the control parameters are determined by minimizing a third mathematical function, which depends on the set points for the process parameters determined in b) and on the changes of the control parameters. The changes of the control parameters on which the third mathematical function depend are the same quantities for which the set points are supposed to be determined according to c). That is, the actual changes of the control parameters from a period of time in the past are taken into account in order to obtain the set points for the future.

$$f_3 = \text{Min } \Sigma \text{ (set points for the process parameters – predicted process parameters)}^2 +$$
$$\Sigma \text{ (changes in control parameters)}^2$$

$$= \text{Min } \Sigma \text{ (set points for the process parameters – function (changes for control parameters))}^2 + \Sigma \text{ (changes for control parameters)}^2$$

Therein, prediction models of the form

$$y_{Estimated,i} = f(\Delta U_1, \Delta U_2, \dots, \Delta U_n)$$

can be used, where $f(\Delta U_1, \Delta U_2, \dots, \Delta U_n)$ determines the relationship between process parameters and suggested changes of control parameters.

The third mathematical function $f_3$ can be, for example:

$$f_3 = \sum_i \left( p_i^S - p_i^p(\Delta c_i) \right)^2 + \sum_i (\Delta c_i)^2$$

Therein, $p_i^S$ is the set points for the process parameters $p_i$ determined in b). $p_i^p(\Delta c_i)$ is a prediction for the process parameters expressed in terms of the changes $\Delta c_i$ of the control parameters $c_i$. In order to be able to treat all these parameters as a sum, preferably $p_i^S$, $p_i^p$ and $\Delta c_i$ are parameters without any unit.

It is not necessary that the third mathematical function has the structure of the given example. In particular, the second mathematical function does not have to be a sum of terms having the power 2 or the equal weighting factor for each term. Depending on how the process parameters and changes of the control parameters are expressed mathematically, the third mathematical function can have various structures. Also, the third mathematical function can depend on various further parameters. For the main concept of the described method the structure of the third mathematical function is not essential. Any mathematical function can be used as the third mathematical function as long as this function depends on the set points for the process parameters determined in b) and on the changes for the control parameters and as long as respective set points for changes of multiple control parameters can be obtained from minimizing this function.

The third level, that is c), preferably includes two main parts. First, there can be process dynamic models which can be either physics or data based. The input of dynamic models include degrees of freedom for changing the process, disturbances to the process and process parameters indicating the process conditions while the outputs are process parameters or qualities which are desired to be maintained in a span or at a setpoint. The task of such dynamic models is to calculate the dynamic response of outputs with regard to changes in model inputs. For example, process time delays between process variables and response rates of changes in different variables and the behavior of process variables while reaching towards the process steady state gains are dynamic behaviors explained and estimated via developed dynamic models. The next step is to use the dynamic models developed in the previous step to come up with the optimization formulation of the dynamic control problem. The solution of such dynamic optimization will be the optimum changes and regulation on the degrees of freedom (inputs) to keep the electrolysis under optimal control. Additionally, it is preferred that process operation and safety boundaries are imposed as constraints.

In d) the product is or the products are obtained by performing the electrolysis using the changes for the control parameters determined in c). That is, the product(s) is/are actually obtained as part of the method. To this end the method results in the actual product(s). Hence, the method can be considered a method of manufacturing.

a) to d) can be considered to be steps of the method. a) to d) can be performed in the given order one after the other in the sense that b) to d) rely on results from the respective previous step. However, it is preferred that a) to d) are performed simultaneously. For example, b) can be performed for a first iteration of the method, while simultaneously a) is already performed for a second iteration. However, it is even possible for the method to be performed continuously such that there are no distinct iterations. In that case a) to d) are continuously performed with continuously updated inputs and outputs. In a preferred embodiment of the method a) to d) are performed periodically.

In a) and/or in b) MINLP can be used. In c) quadratic programming can be used.

In a preferred embodiment of the method in a) a production schedule is determined.

The production schedule can be expressed as a value for the set point for the production output provided as a function of the time. That is, in a) it is determined how much of the product(s) is/are supposed to be obtained when.

In a further preferred embodiment of the method in a) a supply chain is taken into account. Preferably, in a) also a maintenance period is taken into account.

The supply chain comprises information regarding the supply of substances and energy to the electrolysis. This information can be taken into account in that the first mathematical equation comprises a respective parameter. Taking this information into account can contribute to using the sources efficiently. This is possible in that the electrolysis is represented by mathematical models that reflect the technical properties of the electrolysis.

In a further preferred embodiment of the method the first mathematical function further depends on a capacity of a storage for the product.

The capacity of the storage for the product can be provided in terms of a respective parameter. The parameter might be a mass or a volume. If the storage capacity is fully exploited, the available sources can be used as efficiently as possible.

In a further preferred embodiment of the method a) comprises using a first model configured for predicting a respective availability of multiple sources of electricity.

The first model is configured to explain and predict availability of various sources of electricity. This can be blue, green or fossil fuel based sources. The prediction can include the fluctuations in the amount of electricity from different sources as well as electricity prices both for buying and selling back to the grid.

In a further preferred embodiment of the method, b) comprises an interaction of

  ▪ a second model configured for predicting operational information based on current and past measured operational information, and
  ▪ a third model configured for describing physical effects of the electrolysis.

The second level of the process control, that is b), comprises two mathematical models that interact with each other. In order to distinguish these models from the first model involved in a), the models used in b) are referred to as a second and third model. The second mathematical model can be configured to predict the operability, degradation, availability and safety of the electrolysis, based on the current operational information and/or on a physical based model. The second mathematical model can be physics driven or data driven. The third mathematical model is configured for describing physical effects of the electrolysis. This may include explaining physical, chemical and/or operational phenomena in the electrolysis arrangement including thermodynamics, mass transfer, heat transfer and/or reaction kinetics. This model can relate several inputs and parameters of the operation like demand capacity, current density, temperature and/or pressure to operation outputs like the production amount and quality. The third mathematical model can be physics driven or data driven.

In a further preferred embodiment of the method the second mathematical function depends on an actual production output provided in terms of the process parameters.

In the example for the second equation provided above $P_{out}(p_i)$ was included as the production output calculated in terms of the process parameters $p_i$.

In a further preferred embodiment of the method in b) safety boundary conditions are adhered to.

The safety boundary conditions can be expressed in terms of respective minimum and/or maximum values for one, some or all of the process parameters. For example, a maximum pressure or a maximum temperature can be provided.

In a further preferred embodiment of the method in b) respective set points are determined at least for an operation temperature and an operation pressure as the process parameters.

The operation temperature and the operation pressure are two key process parameters.

In a further preferred embodiment of the method in c) for the process parameters respective dynamic responses to respective changes of the control parameters are calculated.

In this embodiment it is determined how a change in a control parameter affects the process parameters. Taking this into account the set points for the process parameters can be reached particularly efficiently.

In a further preferred embodiment of the method the changes of the control parameters are determined in c) such that the process parameters are set to the respective set points.

The purpose of the third level is to determine how the set points for the process parameters can be reached most efficiently. To this end, the changes of the control parameters are determined.

As a further aspect of the invention an electrolysis arrangement is presented that comprises:

  ▪ an electrolysis installation having at least one electrolysis stack and a supply installation for supplying an electrolysis medium and electric energy to the at least one electrolysis stack,
  ▪ a control unit configured for controlling the electrolysis installation so as to obtain a product by electrolysis with the described method.

The advantages and features of the method are transferrable to the electrolysis arrangement, and vice versa. The method is preferably performed using the described electrolysis arrangement.

In a preferred embodiment of the electrolysis arrangement the control unit is configured for frequently receiving information from the electrolysis installation and for frequently providing control signals to the electrolysis installation.

In the following the invention will be described with respect to the figures. The figures show a preferred embodiment, to which the invention is not limited. The figures and the dimensions shown therein are only schematic. The figures show:

Fig. 1:    an electrolysis arrangement according to the invention,

Fig. 2:    a visualization of a method for obtaining a product by electrolysis according to the invention.

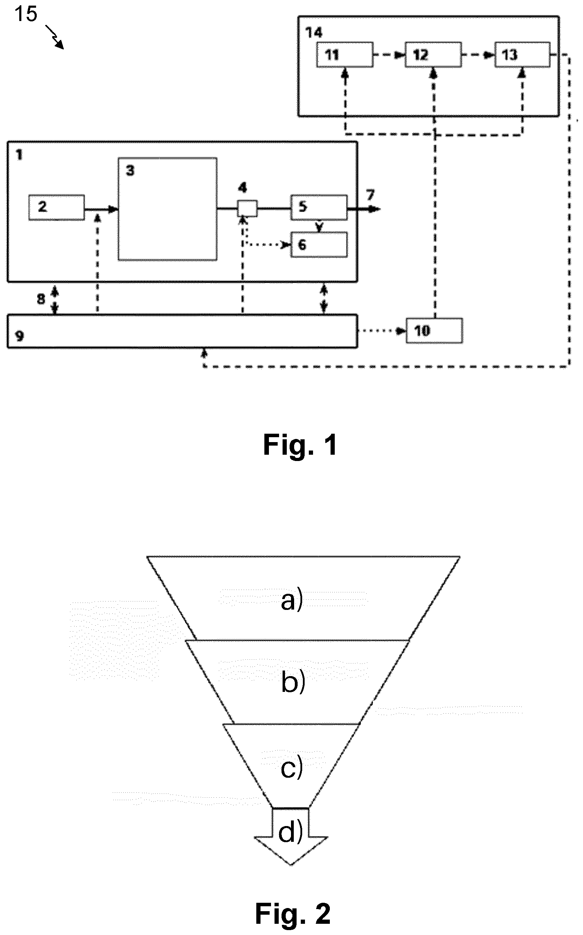

Fig. 1 shows an electrolysis arrangement 15 comprising an electrolysis installation 1 with an electrolysis stack 3 and a supply installation 2 for supplying an electrolysis medium and electric energy to the at least one electrolysis stack 3. Downstream of the electrolysis stack 3 a stream of electrolysis products is provided. In case of more than one electrolysis products, respective flows are provided. With units 4,5,6 the electrolysis product(s) are treated. Therein, unit 4 is a gas/liquid separator unit configured for purification and unit 5 is a gas purification unit such as a water condenser. The unit 6 can be, for example, configured as an analysis unit. At a terminal 7 the electrolysis product can exit the electrolysis installation 1.

Further, the electrolysis arrangement 15 comprises a control unit 14 configured for controlling the electrolysis device 1 so as to obtain a product by electrolysis with the method illustrated in Fig. 2. The control unit 14 comprises a respective control element 11,12,13 for a), b) and c) of the method. The control unit 14 is configured for frequently receiving information from the electrolysis installation 1 and for frequently providing control signals to the electrolysis installation 1.

The electrolysis arrangement 15 further comprises a distributed control system (DCS) 9 that is connected to the electrolysis installation 1 via a link 8 and that is connected to the control unit 14. The distributed control system (DCS) 9 is connected to a SCADA system 10, where all the current and historical data are stored and accessible.

Fig. 2 illustrates a method for obtaining a product by electrolysis. The method comprises:

a) determining a set point for a production output by minimizing a first mathematical function, which depends on the production output and on a predicted product demand,
b) determining respective set points for multiple process parameters by minimizing a second mathematical function, which depends on the set point for the production output determined in a), on the process parameters and on predicted degradation effects,
c) determining respective set points for changes of multiple control parameters by minimizing a third mathematical function, which depends on the set points for the process parameters determined in b) and on the changes of the control parameters,
d) obtaining the product by performing the electrolysis using the set points for the changes of the control parameters determined in c).

**List of reference numerals**

1     electrolysis installation
2     supply installation
3     electrolysis stack
4     unit
5     unit
6     unit
7     terminal
8     link
9     distributed control system (DCS)
10    SCADA system
11    control element
12    control element
13    control element
14    control unit
15    electrolysis arrangement

**Claims**

1.   Method for obtaining a product by electrolysis, comprising:

a) determining a set point for a production output by minimizing a first mathematical function, which depends on the production output and on a predicted product demand,

b) determining respective set points for multiple process parameters by minimizing a second mathematical function, which depends on the set point for the production output determined in a), on the process parameters and on predicted degradation effects,

c) determining respective set points for changes of multiple control parameters by minimizing a third mathematical function, which depends on the set points for the process parameters determined in b) and on the changes of the control parameters,

d) obtaining the product by performing the electrolysis using the set points for the changes of the control parameters determined in c).

2. Method according to claim 1, wherein a) to d) are performed periodically.

3. Method according to one of the preceding claims, wherein in a) a production schedule is determined.

4. Method according to one of the preceding claims, wherein in a) a supply chain is taken into account.

5. Method according to any of the preceding claims, wherein the first mathematical function further depends on a capacity of a storage for the product.

6. Method according to any of the preceding claims, wherein a) comprises using a first model configured for predicting a respective availability of multiple sources of electricity.

7. Method according to any of the preceding claims, wherein b) comprises an interaction of

- a second model configured for predicting operational information based on current and past measured operational information, and
- a third model configured for describing physical effects of the electrolysis.

8. Method according to any of the preceding claims, wherein the second mathematical function depends on an actual production output provided in terms of the process parameters.

9. Method according to any of the preceding claims, wherein in b) safety boundary conditions are adhered to.

10. Method according to any of the preceding claims, wherein in b) respective set points are determined at least for an operation temperature and an operation pressure as the process parameters.

11. Method according to any of the preceding claims, wherein in c) for the process parameters respective dynamic responses to respective changes of the control parameters are calculated.

12. Method according to any of the preceding claims, wherein the changes of the control parameters are determined in c) such that the process parameters are set to the respective set points.

13. Electrolysis arrangement (15) comprising:

- an electrolysis installation (1) having at least one electrolysis stack (3) and a supply installation (2) for supplying an electrolysis medium and electric energy to the at least one electrolysis stack (3),
- a control unit (14) configured for controlling the electrolysis installation (1) so as to obtain a product by electrolysis with a method according to any of the preceding claims.

14. Electrolysis arrangement (15) according to claim 13, wherein the control unit (14) is configured for frequently receiving information from the electrolysis installation (1) and for frequently providing control signals to the electrolysis installation (1).

15

**Fig. 1**

**Fig. 2**

Europäisches
Patentamt
European
Patent Office
Office européen
des brevets

**EUROPEAN SEARCH REPORT**

Application Number

**EP 21 19 0119**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/127646 A1 (DOLAND GEORGE J [US]) 5 June 2008 (2008-06-05) * paragraphs [0034] - [0036]; figure 2 * * paragraphs [0037] - [0040]; figure 3 * * paragraph [0041]; figure 4 * ----- | 1-9, 11-14 | INV. C25B15/025 C25B15/027 C25B1/04 |
| X | CAI QIONG ET AL: "Optimal control strategies for hydrogen production when coupling solid oxide electrolysers with intermittent renewable energies", JOURNAL OF POWER SOURCES, ELSEVIER, AMSTERDAM, NL, vol. 268, 14 June 2014 (2014-06-14), pages 212-224, XP029010553, ISSN: 0378-7753, DOI: 10.1016/J.JPOWSOUR.2014.06.028 * the whole document * ----- | 1-14 | |
| X | EP 3 719 171 A1 (DYNELECTRO APS [DK]) 7 October 2020 (2020-10-07) * paragraphs [0003] - [0010] * * paragraphs [0016] - [0021] * * paragraphs [0032] - [0035] * * paragraph [0040] * * paragraph [0027] * ----- | 1-14 | TECHNICAL FIELDS SEARCHED (IPC) C25B |
| X | US 2020/002823 A1 (ONO AKIHIKO [JP] ET AL) 2 January 2020 (2020-01-02) * paragraphs [0059] - [0065]; figures 1-3 * ----- | 1-14 | |

The present search report has been drawn up for all claims

| Place of search | Date of completion of the search | Examiner |
|---|---|---|
| Munich | 31 January 2022 | Desbois, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................
& : member of the same patent family, corresponding document

## ANNEX TO THE EUROPEAN SEARCH REPORT
## ON EUROPEAN PATENT APPLICATION NO.

EP 21 19 0119

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2022

| Patent document cited in search report | | Publication date | Patent family member(s) | | Publication date |
|---|---|---|---|---|---|
| US 2008127646 | A1 | 05-06-2008 | NONE | | |
| EP 3719171 | A1 | 07-10-2020 | AU | 2020251188 A1 | 07-10-2021 |
| | | | CA | 3133432 A1 | 08-10-2020 |
| | | | CN | 113677828 A | 19-11-2021 |
| | | | EP | 3719171 A1 | 07-10-2020 |
| | | | EP | 3947779 A1 | 09-02-2022 |
| | | | WO | 2020201485 A1 | 08-10-2020 |
| US 2020002823 | A1 | 02-01-2020 | JP | 6823000 B2 | 27-01-2021 |
| | | | JP | 2019163530 A | 26-09-2019 |
| | | | US | 2020002823 A1 | 02-01-2020 |
| | | | WO | 2019181003 A1 | 26-09-2019 |

EPO FORM P0459

For more details about this annex : see Official Journal of the European Patent Office, No. 12/82